# EUROPÄISCHE PATENTSCHRIFT

(11) **EP 0 892 482 B1**
(45) Veröffentlichungstag und Bekanntmachung des Hinweises auf die Patenterteilung: **16.08.2001**
(21) Anmeldenummer: 98108037.7
(22) Anmeldetag: 02.05.1998
(51) Int. Cl.: H02K 7/12, F16D 59/00, F16D 49/00

(54) **Bremseinrichtung für einen Elektromotor**
Brake arrangement associated with an electric motor
Frein associé à un moteur électrique

(30) Priorität: 14.07.1997 DE 29712404 U
(43) Veröffentlichungstag der Anmeldung: 20.01.1999
(73) Patentinhaber: Dewert Antriebs- und Systemtechnik GmbH & Co. KG, D-32278 Kirchlengern (DE)
(72) Erfinder: Palm, Dieter, 33719 Bielefeld (DE)
(74) Vertreter: Stracke, Alexander, Dipl.-Ing.

(56) Entgegenhaltungen:
- WO-A-97/09769
- FR-A- 2 695 968
- US-A- 4 059 779
- US-A- 5 070 266

## Beschreibung

Die Erfindung betrifft einen Elektromotor, insbesondere für einen elektromotorischen Möbelantrieb, mit einem Stator und mit einem in dem Stator rotierfähig gelagerten Rotor und mit einer Bremseinrichtung, die im wesentlichen aus einem auf den Rotorzapfen fest aufgesetzten Bremskörper und wenigstens einer zugeordneten Bremsbacke besteht, die drehbar auf Zapfen des Stators gelagert ist, wobei der Stator um einen definierten Winkel gegenüber einer ortsfesten Montageplatte derart verdrehbar ist, daß bei Drehung des Rotors die Bremsbacke selbsttätig lösbar und bei Stillstand des Rotors die Bremsbacke selbsttätig in die Bremsstellung verfahrbar ist.

Der in Rede stehende Motor ist besonders für Möbel im häuslichen und auch im Kranken- und Pflegebereich einsetzbar. Die Montageplatte stellt die Verbindung zwischen dem Motor und dem anzutreibenden Keil, beispielsweise einem Getriebe her. Bei Verwendung als Möbelantrieb kann durch den Einsatz der Bremseinrichtung das Getriebe so ausgelegt sein, daß es nicht mehr selbsthemmend ist. Derartige Getriebe haben gegenüber selbsthemmenden Getrieben den Vorteil, daß der Wirkungsgrad wesentlich höher ist, so daß bei gleicher Leistung eine geringere Stromaufnahme erfolgt. Andererseits ist es bei Möbelantrieben, die insbesondere im Kranken- und im Pflegebereich eingesetzt werden erforderlich, daß die Auf- und Abbewegung des zu verstellenden Möbelbauteils nicht nur mit der relativ geringen Verstellgeschwindigkeit des Möbelantriebes erfolgt, sondern, daß insbesondere die Abwärtsbewegung bei ausgekuppeltem Antrieb erfolgen kann. Es ist dann notwendig, an geeigneter Stelle eine Trennung innerhalb des Antriebszuges vorzunehmen. Es muß jedoch sichergestellt sein, daß dann das zu verstellende Möbelbauteil nicht im freien Fall in die untere Stellung verfährt.

Es ist kürzlich ein Elektromotor bekannt geworden, auf dessen Abtriebszapfen ein Bremskörper drehfest aufgesetzt ist, so daß bei stromdurchfluteten Stator dieser mit der Drehzahl des Rotors rotiert. Der Stator ist gegenüber der ortsfesten Montageplatte um einen relativ geringen Winkel verdrehbar. Diese Drehung ist notwendig, um das elektromagnetische Kraftspiel zwischen dem Rotor und dem Stator im Motor auszunutzen. Bei stromdurchflutetem Stator wird eine der Drehrichtung entgegengesetzte Kraft vom Stator auf das Gehäuse ausgeübt, so daß die Bremsbacken keine Bremskraft ausüben. Die Auf- oder Abverstellung kann dann ungebremst vorgenommen werden. Wird jedoch der Strom abgeschaltet, hat der Rotor das Bestreben weiterzudrehen, das elektromagnetische Kräftespiel im Motor reversiert jedoch und dadurch wird eine Kraft in Drehrichtung auf das Statorgehäuse ausgeübt, so daß durch die entsprechende Auslegung die Bremsbacken auf den Bremskörper einwirken.

Bei dieser Ausführung würde jedoch auch beim Ausrücken des Antriebszuges das Möbelbauteil ungebremst in die untere Stellung fallen. Um dieses zu vermeiden ist vorgeschlagen worden, ein Bremselement in Form einer Schlingfederbremse zu verwenden. Konstruktiv ist diese Lösung jedoch aufwendig und außerdem ist die zum gezielten Abwärtsbewegen des Möbelbauteils notwendige Bremskraft bzw. Dämpfungskraft äußerst schwierig zu regulieren.

Ausgehend von einem mit der selbsttätigen Bremseinrichtung ausgerüsteten Elektromotor liegt der Erfindung die Aufgabe zugrunde, den eingangs näher beschriebenen Elektromotor so auszubilden, daß in konstruktiv einfacher Weise eine Möglichkeit geschaffen wird, bei abgeschalteter Stromzufuhr und demzufolge in der Bremsstellung sich befindenden Bremsbacken das mit dem Elektromotor in Antriebsverbindung stehende Möbelbauteil mit einer gezielten Geschwindigkeit absenkbar ist, wobei die Geschwindigkeit noch regelbar sein soll.

Die gestellte Aufgabe wird gelöst, indem der feststehenden Bremsbacke bzw. den feststehenden Bremsbacken mindestens eine mit dem Bremskörper in Funktionsstellungen bringbare Ausrückbacke zugeordnet ist, die gegenüber dem Bremskörper in eine Freigabe- und in eine Ausrückstellung derart bringbar ist, daß in der Ausrückstellung die Bremsbacke bzw. die Bremsbacken gelöst und die Ausrückbacke bzw. die Ausrückbacken den Bremskörper mit einer eine gedämpfte Drehung des Rotors ermöglichen Dämpfkraft kontaktiert.

Im Normalbetrieb wird trotz der Verwendung eines nicht selbsthemmenden Getriebes durch die Bremseinrichtung bewirkt, daß beim Einschalten des Elektromotors die Bremsbacken selbsttätig gelöst werden und beim Abschalten des Elektromotors diese in die Bremsstellung fallen. Durch die zusätzliche, konstruktiv einfache Lösung mit der Ausrückbacke bzw. den Ausrückbacken ist sichergestellt, daß im Falle des Ausrückens des Antriebes die Bremsbacken gelöst werden, die Ausrückbacke bzw. die Ausrückbacken jedoch eine ausreichende Abbremsung sicherstellen, so daß das abwärts zu verstellende Möbelbauteil gedämpft bzw. gebremst selbsttätig verfährt, wobei die Absenkgeschwindigkeit durch die Regulierung der Dämpfkraft variierbar ist. Ein weiterer Vorteil ist, daß die Anzahl der Teile äußerst gering wird, da lediglich dem Bremskörper eine Ausrückbacke bzw. mehrere Ausrückbacken zugeordnet werden müssen, wobei zum Ausrücken des Antriebes ein geeignetes Betätigungselement notwendig ist.

Eine konstruktiv einfache Lösung ergibt sich, wenn jede Bremsbacke und jede Ausrückbacke mittels eines gegenüber dem Statorgehäuse verdrehbaren Ausrückringes betätigbar ist, welcher mit einer der Anzahl der Brems- und der Ausrückbacken entsprechenden Stückzahl von Betätigungssegmenten derart versehen ist, daß beim Andrücken der Ausrückbacken an den Bremskörper die Bremsbacken lösbar sind. Durch Verdrehen dieses Ringes bei Stillstand des Elektromotors wird die Bremse gelöst, so daß das abzusenkende Möbelbauteil selbsttätig in eine untere Stellung verfahren kann, wobei jedoch die Ausrückbacken auf den Bremskörper eine solche Kraft ausüben, daß die Bewegung des Möbelbauteils gedämpft ist. Damit die von den Ausrückbacken auf den Bremskörper übertragenen Bremskräfte feinfühlig durch Vergrößerung des Verdrehwinkels des Ausrückringes erhöht werden können, ist vorgesehen, daß die Innenflächen jedes Betätigungssegmentes kreisbogenförmig ausgebildet sind, jedoch nicht konzentrisch zur Außenfläche des Ausrückringes verlaufen. Die Innenflächen jedes Betätigungssegmentes, die den Brems- und den Ausrückbacken zugeordnet sind, stehen dann so, daß bei Vergrößerung des Verdrehwinkels sich der Abstand von der Außenfläche des Ausrückringes vergrößert. Durch eine derartige Gestaltung läßt sich in einfachster Weise die von den Ausrückbacken ausgehende Bremskraft stufenlos und mit geringem Anstieg erhöhen.

Es ist weiterhin vorgesehen, daß jede Ausrückbacke segmentartig ausgebildet ist und an der dem zugehörigen Betätigungssegment zugewandten Seite einen vom zugehörigen Betätigungssegment kontaktierbaren Nocken aufweist. Dadurch werden die Berührungsflächen zwischen dem Betätigungssegment und der Ausrückbacke kleingehalten. Zur einfachen Verdrehung des Ausrückringes ist vorgesehen, daß dieser an der äußeren, den Betätigungssegmenten abgewandten Seite mit einem Betätigungshebel versehen ist. Da üblicherweise die Antriebe so montiert werden, daß sie schlecht zugänglich sind, kann an dem Betätigungshebel ein Betätigungselement, beispielsweise in Form eines Bowdenzuges oder ein Gestänge angeschlossen werden.

Anhand der beiliegenden Zeichnungen wird die Erfindung noch näher erläutert.

Es zeigen:
- Figur 1: die Anordnung der Brems- und Ausrückbacken mit dem Ausrückring zeigend, bei Stillstand des Elektromotors,
- Figur 2: die Stellung der Anordnung nach der Fig. 1 bei der Abwärtsbewegung eines Möbelbauteiles,
- Figur 3: die Stellung der Bauteile gemäß der Fig. 1 bei der Aufwärtsbewegung eines Möbelbauteiles zeigend,
- Figur 4: eine der Fig. 1 entsprechende Darstellung, jedoch bei gelösten Bremsbacken und betätigten Ausrückbacken in einer ersten Ausführung,
- Figur 5: eine der Fig. 4 entsprechende Darstellung, in einer zweiten Ausführung und
- Figur 6: die drei möglichen Stellungen des Ausrückringes in einer Figur zeigend.

Aus Gründen der vereinfachten Darstellung ist der Elektromotor nicht dargestellt. Es handelt sich um einen allgemein bekannten Motor mit einem feststehenden Stator und einem rotierfähigem Rotor. Der Stator ist in einem Statorgehäuse angeordnet. Im dargestellten Ausführungsbeispiel ist das Statorgehäuse an zwei einander gegenüberliegenden Seiten mit zwei Zapfen 10, 11 versehen, die in zwei Langlöcher 12, 13 eingreifen, welche in Augen einer feststehenden Montageplatte 14 angeordnet sind. Die Montageplatte 14 dient der Verbindung eines vom Motor anzutreibenden Elementes, beispielsweise einem nicht dargestellten Getriebe. Dieses Getriebe ist in besonders vorteilhafter Weise nicht mehr selbsthemmend. Auf dem Abtriebszapfen 15 des Rotors ist ein Bremskörper 16 drehfest aufgesetzt. Das Statorgehäuse ist im dargestellten Ausführungsbeispiel mit zwei um einen Winkel von 180 Grad zueinander versetzten Lagerbolzen 17, 18 versehen, auf denen die Bremsbacken 19, 20 schwenkbar gelagert sind.

Ferner sind in dem Statorgehäuse noch zwei achsparallele Bolzen 21, 22 gelagert, die funktionell den Bremsbacken 19 und 20 zugeordnet sind. Jede Bremsbacke besteht aus einem segmentförmigen Teil, welches die Bohrung zur Lagerung auf den Lagerbolzen 17, 18 trägt und einem nicht geradlinig ausgebildeten Finger.

Ferner sind in dem Statorgehäuse noch zwei Aufnahmebolzen 23, 24 fest angeordnet, auf denen jeweils eine Ausrückbacke 25, 26 frei drehbar gelagert ist. Die Ausrückbacken 25, 26 sind segmentartig gestaltet und funktionell dem Bremskörper 16 zugeordnet. Die Bremsbacken 19, 20 und die Ausrückbacken 25, 26 werden von einem Ausrückring 27 umgeben, der gegenüber der feststehenden Montageplatte 14 verdrehbar ist. Innenseitig trägt der Ausrückring 27 zwei bogenförmig ausgebildete Betätigungssegmente 28, 29, deren Innenflächen zwar kreisbogenförmig ausgebildet sind, jedoch nicht konzentrisch zur Außenfläche des Ausrückringes 27 verlaufen, so daß sinngemäß ein bogenförmiger Keil gebildet wird. Der Ausrückring 27 ist an der äußeren Seite mit einem Betätigungshebel 30 ausgerüstet, um ein Betätigungselement, beispielsweise in Form eines Bowdenzuges, eines Gestänges oder dergleichen anzuschließen. Die Betätigungssegmente 28, 29, der Betätigungshebel 30 und der Ausrückring 27 sind als einstückiges Formteil ausgebildet. Jede Ausrückbacke 25, 26 ist an der äußeren, den Betätigungssegmenten 28, 29 zugewandten Seite mit einem Nocken 25a und 26a versehen.

Die Figuren zeigen, daß der Ausrückring 27 mittels einer Druckfeder 31 belastet ist, die ihn immer in die Grundstellung drückt. Im dargestellten Ausführungsbeispiel wirkt die Druckfeder 31 auf den Betätigungshebel 30.

Im dargestellten Ausführungsbeispiel ist die Anordnung mit jeweils zwei Bremsbacken 19, 20 und zwei Ausrückbacken 25, 26 sowie zwei Betätigungssegmenten 28, 29 versehen. Die Bremsbacken 19, 20 und die Ausrückbacke 25, 26 sind immer um einen Winkel von 180 Grad zueinander versetzt. Es ergibt sich, daß die Anzahl variiert werden kann. Die Bremsbacken 19, 20 und die Ausrückbacken 25, 26 wechseln in der Umlaufrichtung derart, daß eine Ausrückbacke 25 bzw. 26 mit einer Bremsbacke 20 bzw. 19 mittels eines Betätigungssegmentes 28 bzw. 29 betätigbar ist.

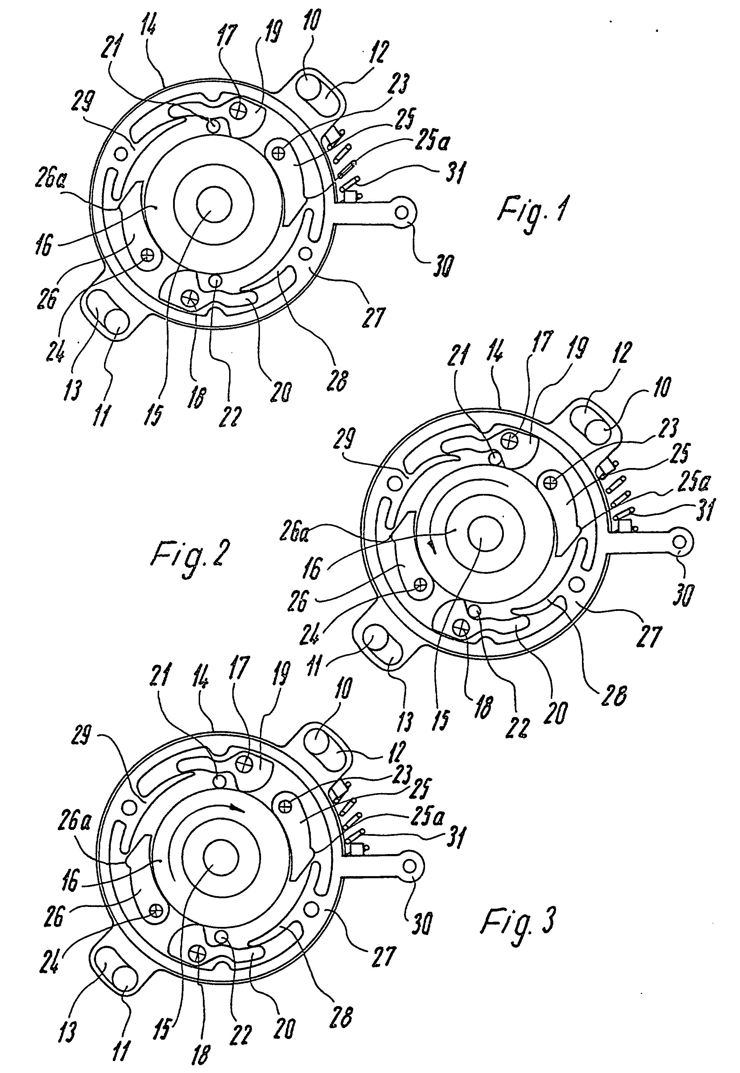

Die Fig. 1 zeigt die Anordnung bei Stillstand des Elektromotors. Das Statorgehäuse steht in einer solchen Stellung, daß die beiden Ausleger der Bremsbacken 19, 20 mit ihren freien Enden mit den Enden der Betätigungssegmente 28, 29 in Eingriff stehen, die im größten Abstand zur Außenfläche des Ausrückringes 27 stehen, so daß die Bremswirkung ausreichend ist, um das antriebstechnisch gekoppelte Möbelbauteil in der jeweiligen Stellung zu halten, obwohl ein Getriebe ohne Selbsthemmung dazwischen liegt. Die Ausrückbacken 25, 26 liegen in dieser Stellung lose auf dem Bremskörper 16 auf. Dieser kann beispielsweise als Bremstrommel ausgebildet sein. Soll das Möbelbauteil gemäß der Darstellung in der Fig. 2 abwärts bewegt werden, wird gemäß dieser Darstellung der Abtriebszapfen 15 und der aufgesetzte Bremskörper 16 entgegen dem Uhrzeigersinn verdreht, wie durch den Pfeil dargestellt ist. Durch die Drehbewegung des Rotors entgegen dem Uhrzeigersinn hat das Statorgehäuse das Bestreben, in entgegengesetzter Richtung auszuweichen, so daß dieses um einen kleinen Winkel im Uhrzeigersinn geschwenkt wird, wie die beiden Stellungen der beiden Zapfen 10, 11 in den Langlöchern 12, 13 zeigen. Durch diese Verdrehung geraten die beiden Bolzen 21, 22 in Kontakt mit den Bremsbacken 19, 20, so daß diese gelöst werden.

Beim Abschalten des Stromes hat der Rotor das Bestreben noch in der gleichen Richtung nachzulaufen. Durch die elektromagnetischen Kräfte im Motor wird jedoch auf das Statorgehäuse eine gleichsinnige Kraft ausgeübt, so daß es in die in der Fig. 1 dargestellte Stellung zurückschwenkt, so daß die Bremsbacken 19, 20 wieder in Funktion treten.

Beim Hochfahren eines Möbelbauteils wird der Abtriebszapfen 15 und der Bremskörper 16 in entgegengesetzter Richtung, d. h. im Uhrzeigersinn gedreht. Das Statorgehäuse verbleibt dann in dieser Stellung, bedingt durch die feststehende Montageplatte 14. Die Bremsbacken 19, 20 werden jedoch durch diese Bewegung so weit gelöst, daß der Bremskörper 16 ungebremst bleibt. Nach dem Abschalten des Stromes ergibt sich wiederum die in Fig. 1 dargestellte gebremste Stillstandsstellung.

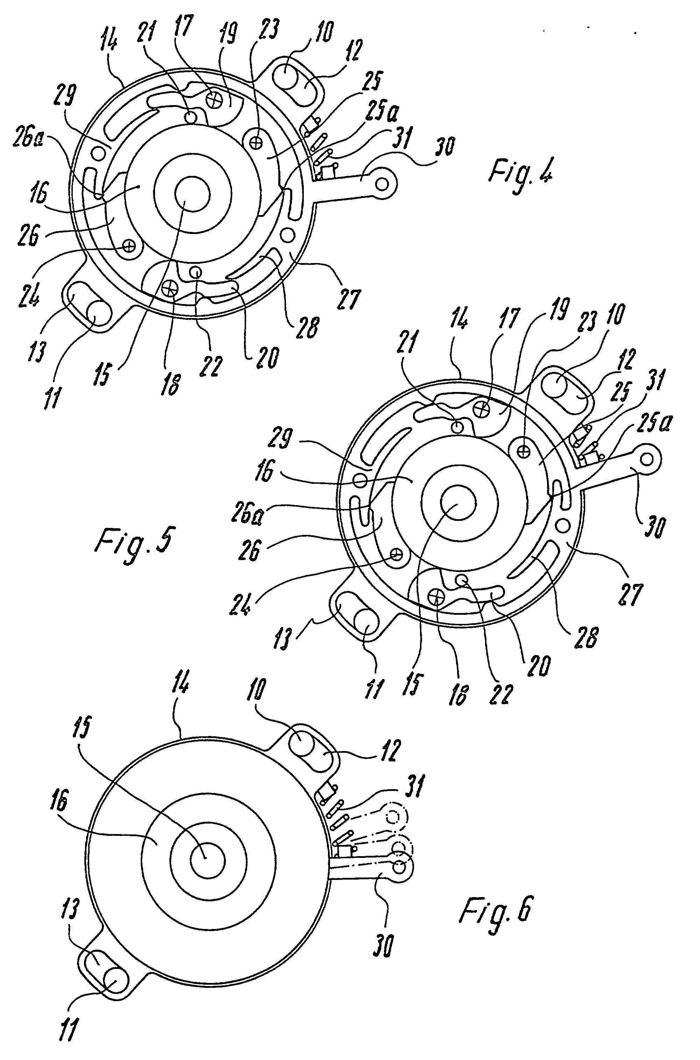

Die Darstellung gemäß der Fig. 4 zeigt nun, daß durch eine Verdrehung im dargestellten Ausführungsbeispiel entgegen dem Uhrzeigersinn, die Betätigungssegmente 28, 29 mit den Ausrückbacken 25, 26 in Kontakt kommen, und zwar mit den Enden, die den die Bremsbacken 19, 20 kontaktierenden Enden gegenüberliegen, d. h. mit den Enden, die in dem geringeren Abstand zur Außenfläche des Ausrückringes 27 stehen. Gleichzeitig werden jedoch die Bremsbacken 19, 20 gelöst, da die zugeordneten Enden der Betätigungssegmente 28, 29 außer Kontakt kommen. Das zu verstellende Möbelbauteil kann dann selbsttätig in eine untere Stellung verfahren.

Ein Vergleich der Fig. 4 mit der Fig. 5 zeigt, daß durch Verdrehen des Ausrückringes 27 in der gleichen Richtung die Anpreßkraft auf die Ausrückbacken 25, 26 erhöht wird, so daß die Dämpfung größer wird. Die Dämpfung richtet sich nach der gewünschten Absenkgeschwindigkeit und auch nach dem Gewicht des abzusenkenden Möbelbauteils.

Die Fig. 6 zeigt noch einmal die drei verschiedenen Stellungen des Ausrückringes 27. Die Druckfeder 31 drückt diesen in die Ausgangsstellung zurück, sobald die Krafteinwirkung entfällt.

Die Erfindung ist nicht auf das dargestellte Ausführungsbeispiel beschränkt. Wesentlich sind außer den nicht durch eine Feder belasteten Bremsbacken, die Ausrückbacken 25, 26, die eine definierte Drehung des Bremskörpers 16 ermöglichen, wenn die Bremsbacken 19, 20 im Stillstand des Motors gleichzeitig gelöst werden.

## Patentansprüche

1. Elektromotor, insbesondere für einen elektromotorischen Möbelantrieb mit einem Stator und mit einem in dem Stator rotierfähig gelagerten Rotor und mit einer Bremseinrichtung, die im wesentlichen aus einem auf den Rotorzapfen fest aufgesetzen Bremskörper und wenigstens einer zugeordneten Bremsbacke besteht, die drehbar auf Zapfen des Stators gelagert ist, wobei das Statorgehäuse um einen definierten Winkel gegenüber einer ortsfesten Montageplatte derart verdrehbar ist, daß bei Drehung des Rotors die Bremsbacke selbsttätig lösbar und bei Stillstand des Rotors die Bremsbacke selbsttätig in die Bremsstellung verfahrbar ist, **dadurch gekennzeichnet, daß** der feststehenden Bremsbacke bzw. den feststehenden Bremsbacken (19, 20) mindestens eine mit dem Bremskörper (16) in Funktionsstellungen bringbare Ausrückbacke (25, 26) zugeordnet ist, die gegenüber dem Bremskörper (16) in eine Freigabe- und in eine Ausrückstellung derart bringbar ist, daß in der Ausrückstellung die Bremsbacke bzw. die Bremsbacken (19, 20) gelöst und die Ausrückbacke bzw. die Ausrückbacken (25, 26) den Bremskörper (16) mit einer eine gedämpfte Drehung des Rotors ermöglichenden Dämpfkraft kontaktiert.

2. Elektromotor nach Anspruch 1, **dadurch gekennzeichnet, daß** jede Bremsbacke (19, 20) und jede Ausrückbacke (25, 26) mittels eines gegenüber dem Statorgehäuse verdrehbaren Ausrückringes (27) betätigbar ist, welcher mit einer der Anzahl der Brems- und der Ausrückbacken (19, 20, 25, 26) entsprechenden Stückzahl von Betätigungssegmenten (28, 29) derart versehen ist, daß beim Ausrücken der Ausrückbacken (25, 26) die Bremsbacken (19, 20) lösbar sind.

3. Elektromotor nach Anspruch 2, **dadurch gekennzeichnet, daß** die Innenflächen jedes Betätigungssegmentes (28, 29) kreisbogenförmig ausgebildet sind, jedoch nicht konzentrisch zur Außenfläche des Ausrückringes (27) verlaufen.

4. Elektromotor nach einem oder mehreren der vorhergehenden Ansprüche 1 bis 3, **dadurch gekennzeichnet, daß** jede Ausrückbacke (25, 26) segmentartig ausgebildet ist und an der dem zugehörigen Betätigungssegment (28, 29) zugewandten Seite einen kontaktierbaren Nocken (25a, 26a) aufweist.

5. Elektromotor nach einem oder mehreren der vorhergehenden Ansprüche 1 bis 4, **dadurch gekennzeichnet, daß** der Ausrückring (27) an der äußeren, den Betätigungssegmenten (28, 29) abgewandten Seite mit einem Betätigungshebel (30) versehen ist.

6. Elektromotor nach einem oder mehreren der vorhergehenden Ansprüche 1 bis 5, **dadurch gekennzeichnet, daß** der Ausrückring (27) mittels einer Druckfeder (31) in die Außerbetriebsstellung für die Ausrückbacken (25, 26) schwenkbar ist.

## Claims

1. An electric motor, in particular for an electromotive drive for furniture with a stator and with a rotor rotatably held in the stator and with a brake device which substantially consists of a brake body which is rigidly inserted on the rotor pin and at least one associated brake shoe which is rotatably held on the pin of the stator, with the stator housing being rotatable about a defined angle with respect to a stationary mounting plate in such a way that during the rotation of the rotor the brake shoe can be released automatically and can be moved back automatically to the braking position upon standstill of the rotor, characterized in that the fixed brake shoe(s) is/are associated with at least one disengaging shoe (25, 26) which can be brought with the brake body (16) into an operative position, which disengaging shoe can be brought into a release and in a disengaging position towards the brake body (16) in such a way that in the disengaging position the brake shoe(s) (19, 20) are disengaged and the disengaging shoe(s) (25, 26) is in contact with the brake body (16) with a damping force allowing a damped rotation of the rotor.

2. An electric motor as claimed in claim 1, characterized in that each brake shoe (19, 20) and each disengaging shoe (25, 26) can be actuated by means of a disengaging ring (27) which is rotatable with respect to the stator housing, which ring is provided with a respective number of actuating segments (28, 29) corresponding to the number of brake and disengaging shoes (19, 20, 25, 26) in such a way that during the disengagement of the disengaging shoes (25, 26) the brake shoes (19, 20) can be released.

3. An electric motor as claimed in claim 2, characterized in that the interior surfaces of each actuating segment (28, 29) are arranged in the shape of a circular arc, but do not extend concentric to the outside surface of the disengaging ring (27).

4. An electric motor as claimed in one or several of the preceding claims 1 to 3, characterized in that each disengaging shoe (25, 26) is provided with a segment-like arrangement and comprises a contactable cam (25a, 26a) on the side facing the associated actuating segment (28, 29).

5. An electric motor as claimed in one or several of the preceding claims 1 to 4, characterized in that the disengaging ring (27) is provided with an actuating lever (30) on the outer side averted from the actuating segments (28, 29).

6. An electric motor as claimed in one of the preceding claims 1 to 5, characterized in that the disengaging ring (27) can be swivelled by means of a pressure spring (31) into the out-of-operation position for the disengaging shoes (25, 26).

## Revendications

1. Moteur électrique destiné, en particulier, à l'entraînement par moteur électrique d'un meuble, comprenant un stator et un rotor monté rotatif dans le stator, et comprenant un dispositif de freinage, constitué essentiellement d'un corps de freinage monté fixe sur l'arbre du rotor et d'au moins une mâchoire de freinage associée, qui est montée mobile sur des tourillons du stator, le boîtier du stator pouvant tourner, suivant un angle défini par rapport à une plaque de montage fixe, de telle sorte que, lors de la rotation du rotor, la mâchoire de freinage se dégage automatiquement et, lorsque le rotor s'immobilise, la mâchoire de freinage soit automatiquement déplaçable en position de freinage, **caractérisé en ce qu'** à la mâchoire de freinage fixe ou aux mâchoires de freinage fixes (19, 20) est associée au moins une mâchoire de débrayage (25, 26) susceptible d'être amenée dans des positions fonctionnelles avec le corps de freinage (16), qui, vis-à-vis du corps de freinage (16) est susceptible d'être placée dans une position de libération et dans une position de débrayage, de telle sorte que, dans la position de débrayage, la mâchoire ou les mâchoires de freinage (19, 20) soient libérées et que la mâchoire ou les mâchoires de débrayage (25, 26) soient en contact avec le corps de freinage (16) en exerçant une force d'amortissement permettant au rotor de tourner de façon amortie.

2. Moteur électrique selon la revendication 1, **caractérisé en ce que** chaque mâchoire de freinage (19, 20) et chaque mâchoire de débrayage (25, 26) peut être actionnée à l'aide d'une bague de débrayage (27) susceptible de tourner par rapport au boîtier du stator, bague qui est équipée de segments d'actionnement (28, 29) dont le nombre correspond à celui des mâchoires de freinage et de débrayage (19, 20, 25, 26), de telle sorte que les mâchoires de freinage (19, 20) puissent se dégager lors du débrayage des mâchoires de débrayage (25, 26).

3. Moteur électrique selon la revendication 2, **caractérisé en ce que** les surfaces internes de chaque segment d'actionnement (28, 29) présentent une forme d'arc de cercle mais ne sont pas concentriques à la surface externe de la bague de débrayage (27).

4. Moteur électrique selon l'une ou plusieurs des revendications précédentes 1 à 3, **caractérisé en ce que** chaque mâchoire de débrayage (25, 26) est du type segment et présente, du côté orienté en direction du segment d'actionnement (28, 29) associé, une came (25a, 26a) susceptible d'être contactée.

5. Moteur électrique selon l'une ou plusieurs des revendications précédentes 1 à 4, **caractérisé en ce que** la bague de débrayage (27) est pourvue, du côté externe, opposé aux segments d'actionnement (28, 29), d'un levier d'actionnement (30).

6. Moteur électrique selon l'une ou plusieurs des revendications précédentes 1 à 5, **caractérisé en ce que** la bague de débrayage (27) peut être basculée, au moyen d'un ressort de compression (31), dans la position de mise hors service des mâchoires de débrayage (25, 26).
